# EUROPÄISCHE PATENTSCHRIFT

(11) **EP 2 005 053 B1**
(45) Veröffentlichungstag und Bekanntmachung des Hinweises auf die Patenterteilung: **22.12.2010**
(21) Anmeldenummer: 07723874.9
(22) Anmeldetag: 02.04.2007
(51) Int. Cl.: F16L 41/08

(54) **SYSTEM ZUR FESTSTELLUNG VON INFORMATION AN EINEM ANSCHLUSS**
SYSTEM FOR THE DETECTION OF INFORMATION AT A CONNECTION
SYSTEME DE DETECTION D'INFORMATION CONCERNANT UN RACCORDEMENT

(30) Priorität: 06.04.2006 DE 202006005618 U
(43) Veröffentlichungstag der Anmeldung: 24.12.2008
(73) Patentinhaber: REHAU AG + Co, 95111 Rehau (DE)
(72) Erfinder: LEIHBECHER, Heiko, 90530 Wendelstein (DE); HENDEL, Roland, 91086 Aurachtal (DE)
(86) Internationale Anmeldenummer: PCT/EP2007/002933
(87) Internationale Veröffentlichungsnummer: WO 2007/115716

(56) Entgegenhaltungen:
- DE-U1-202005 005 320
- US-A- 5 029 879
- US-A1- 2001 029 989
- US-B1- 6 576 862

## Beschreibung

Die Erfindung bezieht sich auf ein System zur Feststellung von Information an einem Anschluss, insbesondere im Tiefbau, wie dieser zwischen einem ersten Kanalabschnitt und einem zweiten Kanalabschnitt gebildet ist und eine Dichtungseinrichtung umfasst, die an dem ersten und an dem zweiten Kanalabschnitt anliegende Dichtflächen und Freiflächen aufweist. Die Erfindung bezieht sich auch auf eine zur Anwendung in dem System präparierte Dichtungseinrichtung. DE 202005005320 U1 beschreibt eine Dichtunganordnung mit den Merkmalen des Oberbegriffs des Anspruchs 1.

Zur Untersuchung von im Tiefbau verlegten Kanälen ist es bekannt, fahrbare Kanalkameras einzusetzen. Damit kann beispielsweise der Zustand von Anschlussstellen optisch untersucht werden. So kann festgestellt werden, ob Wurzelwerk durch die Abdichtstellen zwischen Rohren hindurch gewachsen ist oder ob es sonstige Undichtigkeitsstellen gibt.

Bei den Betreibern von Kanälen besteht das Bedürfnis, weitere Informationen über das existierende Kanalsystem zu erhalten, die über die geschilderten Zustandsinformationen hinausgehen. Nach Jahr und Tag ist gewöhnlich nicht mehr bekannt, von welchem Hersteller kritische Bauteile in dem Kanalsystem stammen. Die Kenntnis solcher Daten ist nicht nur für Gewährleistungsansprüche wichtig, sondern auch für die Planung neuer Anlagen, wenn man auf Bewährtes zurückgreifen will.

Es sei erwähnt, dass am Kopf von Dichtungen, beispielsweise Dichtungen für Seitenanschlüsse zu Nebenleitungen, alphanumerische Information in Form von Angaben über die Herkunft, den Typ, das verwendete Material und eingehaltene Normen angebracht sind. Diese Angaben sind für den Monteur der Dichtung gut sichtbar, verschwinden aber im Erdreich, sobald der Kanal verfüllt wird, in welchem die Nebenleitung läuft.

Gemeinden und Abwasserverbände stellen Sammlerabwasserkanäle zur Verfügung, an die die einzelnen Haushalte über Nebenleitungen und Seitenanschlüsse angeschlossen werden. Die Anschlüsse unterschiedlicher Haushalte erfolgen zu unterschiedlichen Einbauzeiten, ohne dass die Gemeinden oder der Abwasserverband das Anschlussdatum genau kennt, was aber für den Beginn der Gebührenberechnung wichtig wäre.

Bei Kanalsystemen für gewerbliche Anlagen ist es häufig wichtig zu wissen, von weichem Gewerbebetrieb ein Abwasserkanal herkommt und welche Medien von dort zu erwarten sind.

Der Erfindung liegt deshalb die Aufgabe zugrunde, ein System zur Feststellung von Information an einem Anschluss zu schaffen, welches von Symbolen geliefert wird.

Die gestellte Aufgabe wird erfindungsgemäß dadurch gelöst, dass symbolische Information, insbesondere alphanumerischer Art (Buchstaben und Ziffern), an einer Freifläche der kritischen Dichtungseinrichtung, die vom Inneren des Kanals aus zu besichtigen und ablesbar ist, angebracht ist.

Die innerhalb des Kanalabschnittes zugängliche Freifläche mit symbolischer, insbesondere alphanumerischer Information enthält nach dem erfindungsgemäßen System Angaben, welche insbesondere die Herkunft der Dichtungseinrichtung, ferner Typ, Abmessungen, Material der Dichtungseinrichtung und eingehaltene Normen betreffen, d. h. Angaben, die man bereits fabrikseitig an der im Inneren des Kanalabschnittes liegenden Freifläche anbringen kann.

Es ist aber auch möglich, am Einbauort weitere aktuelle Angaben auf der fraglichen Freifläche dauerhaft anzubringen, beispielsweise durch Einbrennen. Es ist weiterhin möglich, separate Teile mit den Zeichen am Einbauort anzubringen, z. B. durch Kleben oder durch Rastverbindung. Solche zusätzliche Information kann die Einbauzeit, den Zielführungsort oder das geförderte Medium betreffen.

Die Erfindung bezieht sich auch auf die Dichtungseinrichtung, die in dem System zur Feststellung von Information verwendet wird. Dabei weist die Dichtungseinrichtung einen Dichtungskörper zur-Abdichtung zwischen dem ersten Kanalabschnitt und dem zweiten Kanalabschnitt auf, wobei eine erste Dichtfläche am ersten Kanalabschnitt und eine zweite Dichtfläche am zweiten Kanalabschnitt anliegen. Quer zu der ersten Dichtfläche und zu der zweiten Dichtfläche erstrecken sich eine erste Freifläche und eine zweite Freifläche, wovon die erste Freifläche zum Kanalaußenbereich, d.h. bspw. zum Erdreich und die zweite Freifläche zum Inneren des Kanalabschnittes hin gerichtet sind. Diese zweite Freifläche trägt die symbolische, insbesondere alphanumerische Information entweder unmittelbar oder mittelbar. Die Erfindung ist besonders vorteilhaft bei Dichtungseinrichtungen für einen Seitenanschluss zwischen einem ersten als Hauptkanal ausgebildeten Kanalabschnitt und einem zweiten als Nebenkanal ausgebildeten Kanalabschnitt anwendbar.

Eine solche Dichtungseinrichtung umfasst einen Dichtungskörper mit umlaufenden Abdichtflächen, ferner eine Kopfpartie und eine Fußpartie. Die umlaufenden Abdichtflächen stellen im Prinzip zylindrische oder kegelförmige Mantelflächen des Dichtungskörpers dar und arbeiten mit Querbohrungsflächen des Hauptkanals bzw. mit der zumeist zylindrischen Außenfläche des abzweigenden Nebenkanals zusammen. Die Kopfpartie ist zur Abstützung des Dichtungskörpers an der Wandlung des Hauptkanals vorgesehen und weist auf der Außenseite die erste Freifläche auf, die gewöhnlich mit dem Erdreich in Berührung kommt. Die Fußpartie endet mit einer Stirnfläche, welche die zweite Freifläche bildet und auf der die symbolische, insbesondere alphanumerische Information angebracht ist, um bei montierter Dichtungseinrichtung vom Inneren des Kanalabschnittes aus betrachtet werden zu können.

Die Dichtungseinrichtung kann auch ein Anschlussformteil umfassen, das mit einer Endfläche.zum Inneren des Kanalabschnittes ausgestattet ist, und auf einer solchen Freifläche kann wenigstens ein Teil der alphanumerischen Information, wie bspw. die Herkunft der Dichtungseinrichtung, ferner Typ, Abmessungen, Material der Dichtungseinrichtung und eingehaltene Normen, angebracht sein.

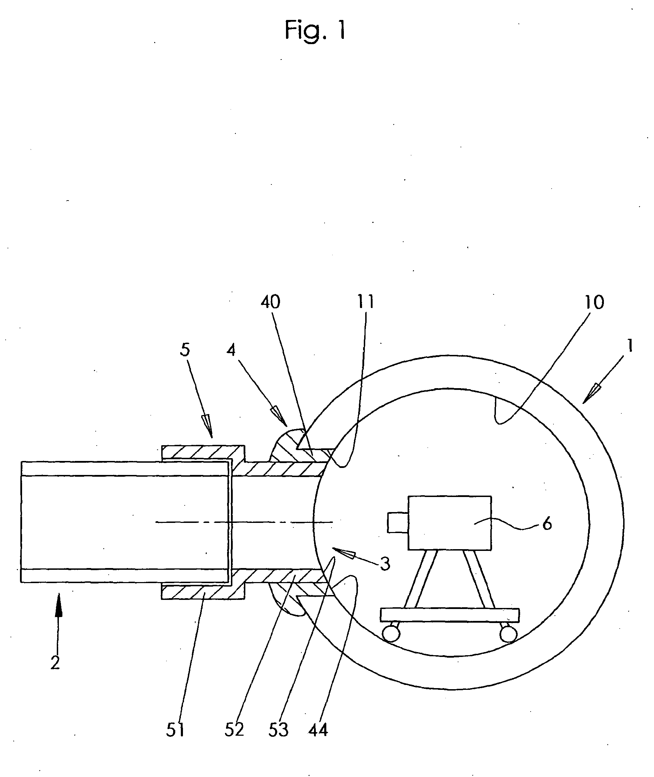

Ein Ausführungsbeispiel der Erfindung wird anhand der Zeichnung beschrieben. Dabei zeigt
- Fig. 1: einen Querschnitt durch ein Hauptrohr mit einer Kanalkamera und einen Längsschnitt durch eine Dichtungseinrichtung für einen Seitenanschluss und

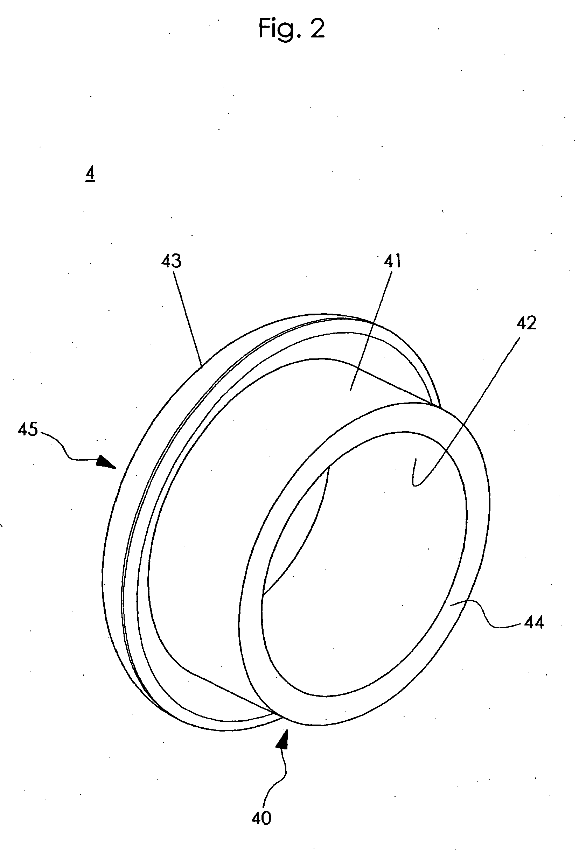

- Fig. 2: eine Dichtungseinrichtung in perspektivischer Darstellung.

Ein Haupt- oder Sammelrohr bildet einen ersten Kanalabschnitt 1, und eine Nebenleitung bildet einen zweiten Kanalabschnitt 2, die über einen Seitenanschluss 3 miteinander verbunden sind. Zur Bildung des Seitenanschlusses 3 weist der Kanalabschnitt 1 eine Querbohrung 11 auf, in der eine Dichtungseinrichtung 4 angeordnet ist. Ein Anschlussformteil 5 in Form eines Stutzens verbindet den Kanalabschnitt 2 mit dem Inneren 10 des Kanalabschnittes 1. Der Seitenanschluss 3 kann bspw. von einer fahrbaren Kamera 6 in Augenschein genommen werden.

Die Dichtungseinrichtung 4 weist einen Dichtungskörper 40, vorzugsweise aus elastomerem Material, auf und besitzt eine erste, äußere, umlaufende Abdichtfläche 41, eine zweite, innere, umlaufende Abdichtfläche 42, eine erste, Kanal-äußere Freifläche 43 und eine zweite Kanal-innere Freifläche 44. Die Freifläche 43 bildet die Oberseite einer Kopfpartie 45 der Dichtungseinrichtung 4, die den Außenrand der Querbohrung 11 umgibt und sich an diesem abstützt. Die Kopfpartie 45 weist eine Sattelform auf, um sich der Krümmung der Außenseite des Kanalabschnittes 1 anzupassen. In ähnlicher Weise kann auch die zweite Freifläche 44 sattelförmig gekrümmt sein, damit der Dichtungskörper 40 die Querbohrung 11 möglichst ausfüllt, ohne in das Innere 10 des Kanalabschnittes 1 vorzustoßen und dort ein Hindernis zu bilden.

Das Anschlussformteil 5 besteht vorzugsweise aus einem thermoplastisch verarbeitbaren Material und weist eine Muffenausbildung 51 zur Aufnahme des Anschlussendes des als Nebenleitung ausgebildeten Kanalabschnittes 2 und einen Rohrstutzen 52 zur abdichtenden Zusammenarbeit mit der Abdichtfläche 42 des Dichtungskörpers 40 auf. Im Einbauzustand weist das Anschlussformteil 5 an seinem dem Kanalabschnitt 2 gegenüberliegendem Endabschnitt eine Freifläche 53 auf, auf der die alphanumerische Information angeordnet ist.

Es gibt hier nicht dargestellte Konstruktionen des Anschlussformteils 5 mit Befestigungsteilen, die den Innenrand der Querbohrung 11 übergreifen und dadurch viel Freifläche zum Anbringen von alphanumerischer Information bieten.

Beim Bau eines Kanals mit Dichtungseinrichtungen zwischen jeweils einem ersten Kanalabschnitt 1 und einem zweiten Kanalabschnitt 2 verwendet man Dichtungseinrichtungen 4, die an ihrer Kanal-inneren Freifläche 44 jeweilige symbolische, insbesondere alphanumerische Information (Buchstabentext, gegebenenfalls mit Ziffern oder Zahlen kombiniert) tragen, die kennzeichnend für den betreffenden Kanalabschnitt 1,2 sind. Dazu zählen die Herkunft bzw. der Hersteller der Dichtungseinrichtung 4, der Typ der Dichtungseinrichtung 4, gegebenenfalls mit kennzeichnenden Abmessungen, das oder die Materialien, aus denen die Dichtungseinrichtung 4 aufgebaut ist, ferner welche Normen eingehalten worden sind. Diese Angaben können bereits fabrikseitig an der Freifläche 44 angebracht worden sein.

Weitere aktuelle Angaben können bauseitig angebracht werden, beispielsweise die Einbauzeit, Hinweise, woher der betreffende Kanalabschnitt 1,2 herkommt bzw. wohin der betreffende Kanalabschnitt 1,2 hinführt und welches Medium in dem Kanalabschnitt 1,2 geführt ist.

Während des Betriebs von Kanälen mit erfindungsgemäßer Ausstattung kann die im Bereich von Anschlüssen angebrachte Information an Freiflächen 44 von Dichtungseinrichtungen 4 bspw. mittels fahrbarer Kanalkamera 6 aufgesucht und ausgelesen werden.

Der Ausdruck "Anschluss" ist im weitesten Sinne zu verstehen und umfasst nicht nur Seitenanschlüsse, sondern auch Verbindungen in fortlaufender Richtung des betreffenden Kanals.

Die Dichtungseinrichtung 4 kann auch an geraden Wänden, wie sie insbesondere auch im Hoch- und Elementenbau vorkommen, eingesetzt werden. Auch hier sind der jeweilige Dichtungseinrichtung 4 zuordenbare, Kanal-innere Freiflächen 44 vorhanden, an die sich symbolische, insbesondere alphanumerische Information mit kennzeichnenden Angaben über den betreffenden Kanal anbringen lassen, so dass sie bspw. von einer fahrbaren Kanalkamera 6 zur gegebenen Zeit ausgelesen werden können.

## Patentansprüche

1. System zur Feststellung von Information an einem Anschluss, umfassend: einen ersten Kanalabschnitt (1); einen zweiten Kanalabschnitt (2); eine Dichtungseinrichtung (4), die an dem ersten Kanalabschnitt (1) und dem zweiten Kanalabschnitt (2) anliegende Dichtflächen (41, 42) und Freiflächen (43, 44) aufweist, von denen eine erste Freifläche (43) außerhalb der Kanalabschnitte (1, 2) und eine zweite Freifläche (44) innerhalb der Kanalabschnitte (1, 2) angeordnet sind, wobei die Information in symbolischer, insbesondere alphanumerischer Ausprägung an der zweiten, Kanal-innenseitigen Freifläche (44) der Dichtungseinrichtung (4) angebracht ist, **dadurch gekennzeichnet, dass** die zweite Freifläche (44) die Information unmittelbar trägt.

2. System nach Anspruch 1, **dadurch gekennzeichnet, dass** die an der zweiten, Kanal-innenseitigen Freifläche (44) angebrachte Information wenigstens eine der folgenden Angaben beinhaltet: Herkunft (Hersteller) der Dichtungseinrichtung (4), Typ, Abmessungen, Materialien, eingehaltene Normen, Einbauzeit, Zielführungsort, gefördertes Medium.

3. System nach Anspruch 1 oder 2, **dadurch gekennzeichnet, dass** der erste Kanalabschnitt (1) einen Hauptkanal und der zweite Kanalabschnitt (2) einen Nebenkanal darstellen, der über einen Seitenanschluss (3) mit dem Hauptkanal verbunden ist:

4. Dichtungseinrichtung zur Verwendung in einem System nach einer der Ansprüche 1 bis 3, umfassend: einen Dichtungskörper (40) mit einer ersten Dichtfläche (41), die am ersten Kanalabschnitt (1) anliegt, mit einer zweiten Dichtfläche (42), die am zweiten Kanalabschnitt (2) anliegt, mit einer ersten Freifläche (43), die dem Kanalaußenbereich benachbart ist, und mit einer zweiten Freifläche (44), die dem Inneren (10) des Kanalabschnittes (1) benachbart ist und die die symbolische, insbesondere alphanumerische Information unmittelbar trägt.

5. Dichtungseinrichtung nach Anspruch 4, **dadurch gekennzeichnet, dass** die Dichtungseinrichtung (4) für einen Seitenanschluss (3) zwischen einem ersten Kanalabschnitt (1) und einem zweiten Kanalabschnitt (2) gestaltet ist, wobei der Dichtungskörper (40) umfasst: umlaufende Abdichtflächen (41, 42) zur Zusammenarbeit mit Querbohrungsflächen (11) des ersten Kanalabschnittes (1) und mit Außenflächen (52) eines Anschlussformteils (5); eine Kopfpartie (45) zur Abstützung an der Wandung des ersten Kanalabschnittes (1) und mit der ersten Freifläche (43) an der Außenseite der Kopfpartie (45), und eine Stirnfläche, welche die zweite Freifläche (44) bildet und die Information unmittelbar trägt und welche bei montierter Dichtungseinrichtung (4) zum Inneren (10) des ersten Kanalabschnittes (1) gerichtet ist.

6. Dichtungseinrichtung nach Anspruch 4 oder 5, **dadurch gekennzeichnet, dass** die Dichtungseinrichtung (4) ein Anschlussformteil (5) umfasst, an dem eine zum Inneren (10) des ersten Kanalabschnittes (1) gerichtete Freifläche (53) vorgesehen ist, die wenigstens einen Teil der folgenden alphanumerischen Information beinhaltet: Herkunft (Hersteller) der Dichtungseinrichtung (4), Typ, Abmessungen, Materialien, eingehaltene Normen, Einbauzeit, Zielführungsort, gefördertes Medium.

## Claims

1. System for detecting information at a connection, comprising: a first channel section (1); a second channel section (2); a seal device (4) which has sealing faces (41,42) which rest against the first channel section (1) and the second channel section (2) and free faces (43,44), a first free face (43) of said free faces being arranged outside the channel sections (1,2) and a second free face (44) of said free faces being arranged within the channel sections (1,2), with the information being provided at the second free face (44) of the seal device (4) inside the channel in symbolic, in particular alphanumeric, form, **characterized in that** the second free face (44) is directly provided with the information.

2. System according to Claim 1, **characterized in that** the information provided at the second free face (44) on the inside of the channel contains at least one of the following items of information: origin (manufacturer) of the seal device (4), type, dimensions, materials, observed standards, installation time, route guidance location, conveyed medium.

3. System according to Claim 1 or 2, **characterized in that** the first channel section (1) constitutes a main channel and the second channel section (2) constitutes an auxiliary channel which is connected to the main channel via a side connection (3).

4. Seal device for use in a system according to one of Claims 1 to 3, comprising: a seal body (40) having a first sealing face (41) which rests against the first channel section (1), having a second sealing face (42) which rests against the second channel section (2), having a first free face (43) which is adjacent to the channel outer region, and having a second free face (44) which is adjacent to the interior (10) of the channel section (1) and which is directly provided with the symbolic, in particular alphanumeric, information.

5. Seal device according to Claim 4, **characterized in that** the seal device (4) is designed for a side connection (3) between a first channel section (1) and a second channel section (2), with the seal body (40) comprising: peripheral sealing-off faces (41, 42) for interacting with transverse hole faces (11) of the first channel section (1) and with outer faces (52) of a shaped connection part (5); a head part (45) for being supported against the wall of the first channel section (1) and with the first free face (43) on the outer side of the head part (45), and an end face which forms the second free face (44) and is directly provided with the information and which is directed toward the interior (10) of the first channel section (1) when the seal device (4) is fitted.

6. Seal device according to Claim 4 or 5, **characterized in that** the seal device (4) comprises a shaped connection part (5) on which a free face (53) which is directed toward the interior (10) of the first channel section (1) is provided, said free face containing at least one component of the following alphanumeric information: origin (manufacturer) of the seal device (4), type, dimensions, materials, observed standards, installation time, route guidance location, conveyed medium.

## Revendications

1. Système de détection d'information à un raccordement, comprenant: une première section de canal (1), une deuxième section de canal (2), un dispositif d'étanchéité (4), qui présente des faces d'étanchéité (41, 42) appliquées sur la première section de canal (1) et sur la deuxième section de canal (2), et des faces libres (43, 44), parmi lesquelles une première face libre (43) est disposée à l'extérieur des sections de canal (1,2) et une deuxième face libre (44) est disposée à l'intérieur des sections de canal (1,2), dans lequel l'information est apposée sous forme symbolique, en particulier alphanumérique, sur la deuxième face libre (44) du dispositif d'étanchéité (4) du côté intérieur du canal, **caractérisé en ce que** la deuxième face libre (44) porte l'information directement.

2. Système selon la revendication 1, **caractérisé en ce que** l'information apposée sur la deuxième face libre (44) du côté intérieur du canal contient au moins une des données suivantes: origine (fabricant) du dispositif d'étanchéité (4), type, dimensions, matériaux, normes respectées, date de montage, lieu de destination, fluide transporté.

3. Système selon la revendication 1 ou 2, **caractérisé en ce que** la première section de canal (1) représente un canal principal et la deuxième section de canal (2) représente un canal secondaire, qui est raccordé au canal principal au moyen d'un raccordement latéral (3).

4. Dispositif d'étanchéité à utiliser dans un système selon l'une quelconque des revendications 1 à 3, comprenant: un corps d'étanchéité (40) avec une première face d'étanchéité (41), qui est appliquée sur la première section de canal (1), avec une deuxième face d'étanchéité (42), qui est appliquée sur la deuxième section de canal (2), avec une première face libre (43), qui est proche de la région extérieure du canal, et avec une deuxième face libre (44), qui est proche de l'intérieur (10) de la section de canal (1) et qui porte directement l'information symbolique, en particulier alphanumérique.

5. Dispositif d'étanchéité selon la revendication 4, **caractérisé en ce que** le dispositif d'étanchéité (4) est configuré pour un raccordement latéral (3) entre une première section de canal (1) et une deuxième section de canal (2), dans lequel le corps d'étanchéité (40) comprend: des faces d'étanchéité périphériques (41, 42) destinées à coopérer avec des faces de perçage transversal (11) de la première section de canal (1) et avec des faces extérieures (52) d'une pièce rapportée de raccordement (5); une partie de tête (45) pour l'appui sur la paroi de la première section de canal (1) et, par la première face libre (43), sur le côté extérieur de la partie de tête (45), et une face frontale, qui forme la deuxième face libre (44) et qui porte directement l'information et qui, lorsque le dispositif d'étanchéité (4) est monté, est orientée vers l'intérieur (10) de la première section de canal (1).

6. Dispositif d'étanchéité selon la revendication 4 ou 5, **caractérisé en ce que** le dispositif d'étanchéité (4) comprend une pièce rapportée de raccordement (5), sur laquelle il est prévu une face libre (53) orientée vers l'intérieur (10) de la première section de canal (1), qui comporte au moins une partie des informations alphanumériques suivantes: origine (fabricant) du dispositif d'étanchéité (4), type, dimensions, matériaux, normes respectées, date de montage, lieu de destination, fluide transporté.
